# EUROPEAN PATENT APPLICATION

(11) **EP 4 852 182 A1**
(43) Date of publication of application: **09.12.2026**
(21) Application number: 26182267.0
(22) Date of filing: 01.06.2026
(51) Int. Cl.: H01M 50/289, H01M 50/204, H01M 50/209

(54) **PACK HOUSING AND BATTERY PACK INCLUDING THE SAME**

(30) Priority: 02.06.2025 KR 20250072024
(71) Applicant: SAMSUNG SDI CO., LTD., Yongin-si, Gyeonggi-do 17084 (KR)
(72) Inventor: JEON, Jee Hoon, 16678 Suwon-si (KR); JO, Yeong Seon, 16678 Suwon-si (KR); KIM, Jung Hwan, 16678 Suwon-si (KR); KIM, Gyu Hyun, 16678 Suwon-si (KR); PARK, Ji Yeon, 16678 Suwon-si (KR); KIM, Min Su, 16678 Suwon-si (KR); KIM, Sung Yong, 16678 Suwon-si (KR)
(74) Representative: Maiwald GmbH

(57) **Abstract**

The present disclosure relates to a pack housing and a battery pack with improved space utilization and a battery pack including the same. To this end, the present disclosure provides a pack housing which includes a bottom plate, a pair of first frames spaced apart from each other in a first direction on the bottom plate, a plurality of second frames arranged between the pair of first frames in a second direction intersecting the first direction and wherein each of two end portions of each second frame of the plurality of second frames is inserted into a different first frame, and a plurality of adhesive members disposed between the end portions of the pair of first frames and the plurality of second frames and which fix the plurality of second frames to the pair of first frames.

## Description

### BACKGROUND

### Field

The present disclosure relates to a pack housing and a battery pack including the same.

### Description of Related Art

Generally, with the recent rapid spread of electronic apparatuses using batteries such as mobile phones, laptop computers, electric vehicles, and the like, recently, the demand for secondary batteries having high energy density and high capacity is rapidly increasing. Accordingly, research and development to improve the performance of lithium secondary batteries is actively being conducted.

A lithium secondary battery is a battery that includes a positive electrode and a negative electrode including active materials capable of intercalation and deintercalation of lithium ions, and an electrolyte, and produces electrical energy through oxidation and reduction reactions when lithium ions are intercalated/deintercalated into/from the positive electrode and negative electrode.

The lithium secondary battery may be utilized in the form of a battery pack comprising a plurality of battery cells connected in series and/or in parallel, and including a battery management system (BMS) for controlling the charging and discharging of the plurality of battery cells.

The herein-described information disclosed in the background technology of this disclosure is only intended to improve understanding of the background of the present disclosure and therefore may include information that does not constitute related art.

### SUMMARY

The present disclosure is directed to providing a pack housing with improved space utilization and a battery pack including the same.

However, technical problems to be solved by the present disclosure are not limited to the problems described herein, and other problems that are not described may be clearly understood by those skilled in the art from the description of the disclosure described herein.

According to an aspect of the present disclosure, a pack housing includes a bottom plate, a pair of first frames spaced apart from each other in a first direction on the bottom plate, a plurality of second frames arranged between the pair of first frames in a second direction intersecting the first direction and wherein each of two end portions of each second frame of the plurality of second frames is inserted into a different first frame, and a plurality of adhesive members disposed between the pair of first frames and end portions of the plurality of second frames and which fix the plurality of second frames to the pair of first frames.

A first frame of the pair of first frames may include a first frame body having an inner surface and an outer surface that extend in the second direction and are disposed to face each other in the first direction, and a plurality of grooves concavely formed from the inner surface toward the outer surface, and for a second frame of the plurality of second frames, each of the two end portions of the second frame may be inserted into a groove of the plurality of grooves of a respective first frame of the plurality of first frames.

A second frame of the plurality of second frames may include a second frame body which extends in the first direction and has a pair of end surfaces, and a pair of cover plates which are coupled to the second frame body and each disposed to face a corresponding one of the end surfaces, wherein the groove may include a groove surface disposed to face a cover plate of the pair of cover plates, and an adhesive member of the plurality of adhesive members may be disposed between the cover plate and the groove surface.

The second frame may further include a cavity which extends in the first direction inside the second frame body and passes through an end surface of the pair of end surfaces.

The second frame may further include a plurality of protruding members which protrude from the cover plate toward the groove surface and are inserted into adhesive members of the plurality of adhesive members.

The pair of end surfaces may include a first end surface disposed to face the groove surface, and a second end surface disposed to face the inner surface, and the cover plate may be disposed between the first end surface and the groove surface.

The second frame may further include a cover welding line which protrudes from the cover plate toward the groove surface and bonds the cover plate and the second frame body.

The cover welding line may be provided as a pair of cover welding lines, the pair of cover welding lines may be spaced apart from each other in the second direction, and the adhesive member may be disposed between the pair of cover welding lines.

A width of the cover welding line in the second direction may decrease toward the groove surface.

The second frame body may further include a pair of inner partitions which extend from the first end surface and are spaced apart from each other in the second direction, and the cover plate and the adhesive member may be disposed between the pair of inner partitions.

An inner partition of the pair of inner partitions may be inserted into the groove and disposed in contact with the groove surface.

The first end surface and the second end surface may be disposed on a vertical surface of the second frame body, and the second frame may further include a body welding line which is disposed between the second end surface and the inner surface and bonds a respective first frame of the pair of first frames and the second frame.

The second end surface may be provided as a pair of second end surfaces, and the first end surface may be disposed between the pair of second end surfaces.

The second end surface may be disposed to be inclined with respect to the first end surface and the inner surface.

A distance between the second end surface and the inner surface may decrease toward the first end surface.

The second frame body may further include a pair of outer partitions which extend from the second end surface and are spaced apart from each other in the second direction, and the body welding line may be disposed between the pair of outer partitions.

An outer partition of the pair of outer partitions may be in contact with the inner surface.

The pack housing may further include one or more third frames disposed between the pair of first frames and disposed to intersect a second frame of the plurality of second frames.

According to another aspect of the present disclosure, a battery pack which the herein pack housing, and a plurality of cell stacks which are disposed inside the pack housing and each include one or more battery cells.

The plurality of cell stacks may be arranged on the bottom plate in at least two rows in the first direction, and the plurality of cell stacks and the plurality of second frames may be alternately disposed in the first direction.

### BRIEF DESCRIPTION OF THE DRAWINGS

The following drawings accompanying the present specification exemplify preferred embodiments of the present disclosure and, together with the detailed description of the disclosure described herein, serve to further illustrate the technical ideas of the present disclosure, and the present disclosure is not to be construed as limited thereto to the matters shown in such figures:
The herein and other objects, features and advantages of the present disclosure will become more apparent to those of ordinary skill in the art by describing exemplary embodiments thereof in detail with reference to the accompanying drawings, in which:
FIG. 1 is a perspective view schematically illustrating a configuration of a battery pack according to embodiments of the present disclosure;
FIG. 2 is a perspective view schematically illustrating a configuration of a battery cell according to embodiments of the present disclosure;
FIG. 3 is a cross-sectional view schematically illustrating the configuration of the battery cell of FIG. 2 according to embodiments of the present disclosure;
FIG. 4 is an exploded perspective view schematically illustrating a configuration of a pack housing according to embodiments of the present disclosure;
FIG. 5 is a perspective view schematically illustrating a configuration of a first frame according to embodiments of the present disclosure;
FIG. 6 is a cross-sectional view schematically illustrating the configuration of the first frame according to embodiments of the present disclosure;
FIG. 7 is a perspective view schematically illustrating a configuration of a second frame according to embodiments of the present disclosure;
FIG. 8 is a perspective view schematically illustrating a configuration of an end portion of the second frame according to embodiments of the present disclosure;
FIG. 9 is an exploded perspective view schematically illustrating the configuration of the end portion of the second frame according to embodiments of the present disclosure;
FIG. 10 is a perspective view schematically illustrating a state in which the first frame and the second frame are coupled according to embodiments of the present disclosure;
FIG. 11 is a bottom perspective view schematically illustrating the state in which the first frame and the second frame are coupled according to embodiments of the present disclosure;
FIG. 12 is a plan cross-sectional view schematically illustrating the state in which the first frame and the second frame are coupled according to embodiments of the present disclosure;
FIG. 13 is a front cross-sectional view schematically illustrating the state in which the first frame and the second frame are coupled according to embodiments of the present disclosure;
FIG. 14 is an enlarged view schematically illustrating a configuration of a third frame according to embodiments of the present disclosure;
FIG. 15 is a cross-sectional view schematically illustrating a configuration of a second frame according to another embodiment of the present disclosure; and
FIG. 16 is a perspective view schematically illustrating the configuration of the second frame according to another embodiment of the present disclosure.

### DETAILED DESCRIPTION

Preferred embodiments of the present disclosure will now be described in detail with reference to the accompanying drawings. Prior to this, terms or words used in this specification and claims should not be interpreted as being limited to ordinary or dictionary meanings and should be interpreted as meanings and concepts consistent with the technical idea of this disclosure based on the principle that the inventor can properly define the concept of the term in order to describe his or her disclosure in the best way. Accordingly, it is to be understood that the embodiments described herein, and the configurations illustrated in the drawings are only some of the most exemplary embodiments of the disclosure and do not represent all of the technical ideas of the disclosure, and that there may be various equivalents and modifications that may replace them at the time of filing this application. Furthermore, when used herein, the terms "comprise or include" and/or "comprising or including" specify the presence of the mentioned shapes, numbers, steps, operations, members, elements, and/or groups thereof and are not intended to exclude the presence or addition of one or more other shapes, numbers, operations, members, elements, and/or groups thereof. In addition, when describing embodiments of the present disclosure, "may" and "may be" can include "one or more embodiments of the present disclosure."

In addition, in order to help understand the disclosure, the attached drawings are not drawn to actual scale, and the dimensions of some components may be exaggerated. In addition, the same reference numbers may be assigned to the same components in different embodiments.

The statement that two objects for comparison are "equal" means "substantially the same." Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

Disposing of any configuration "on (or under)" a component or "above (or below)" a component can mean not only that any configuration is disposed abutting the upper surface (or lower surface) of the component, but also that other configurations can be interposed between the component and any configuration disposed on (or under) the component.

In addition, when a component is described as being "connected," "coupled," or "linked" to another component, it is to be understood that the components may be directly coupled or connected to one another, but that other components may be "interposed" between the components, or that each component may be "connected," "coupled," or "linked" through another component. In addition, when a portion is "electrically coupled" to another part, this includes not only the case where it is "directly connected" but also the case where it is "connected" with another member or element interposed therebetween.

Whenever reference is made throughout the specification to "A and/or B," this means A, B, or A and B, unless otherwise specified. That is, "and/or" includes all or any combination of the listed items. When "C to D" is described, this means C or more and D or less, unless otherwise specified.

When "C to D" is stated, it means greater than or equal to C and less than or equal to D unless otherwise specifically stated. When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terminology used in the present specification is intended to describe embodiments of the present disclosure and is not intended to limit the present disclosure.

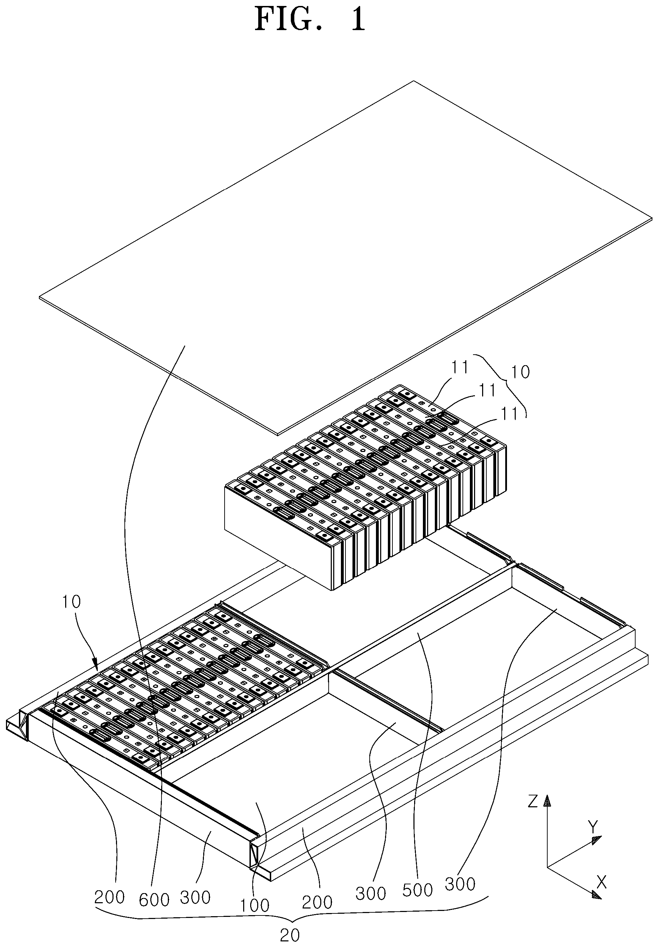

FIG. 1 is a perspective view schematically illustrating a configuration of a battery pack according to embodiments of the present disclosure.

A first direction described herein may be exemplified as a direction parallel to an X-axis direction based on FIG. 1, a second direction may be exemplified as a direction parallel to a Y-axis direction based on FIG. 1, and an up-down direction may be exemplified as a direction parallel to a Z-axis direction based on FIG. 1.

Referring to FIG. 1, the battery pack according to the present embodiment may include a cell stack 10 and a pack housing 20.

The cell stack 10 may include one or more battery cells 11. Hereinafter, an example in which the cell stack 10 includes a plurality of battery cells 11 is described, but the cell stack 10 is not limited thereto and may be formed to include only a single battery cell 11.

The cell stack 10 may be provided as a plurality of cell stacks 10. The plurality of cell stacks 10 may be arranged in two or more columns in at least one of a first direction and a second direction. Hereinafter, an example in which the number of the plurality of cell stacks 10 are four and the four cell stacks 10 are arranged in two columns in the first direction and in the second direction, respectively will be described. However, the number and arrangement of the cell stacks 10 is not limited thereto and may be designed to change in any of various ways.

The battery cell 11 may function as a unit structure that stores and supplies power in the battery pack.

When the cell stack 10 includes a plurality of battery cells 11, the battery cells 11 constituting each cell stack 10 may be arranged in the second direction. The number of battery cells 11 constituting each cell stack 10 is not limited to that illustrated in FIG. 1 and may be designed to change in any of various numbers.

Hereinafter, an example in which the battery cell 11 is a prismatic secondary battery will be described. However, aspects of the technology described herein is not limited thereto, and the battery cell 11 may be a pouch-type secondary battery or a cylindrical secondary battery.

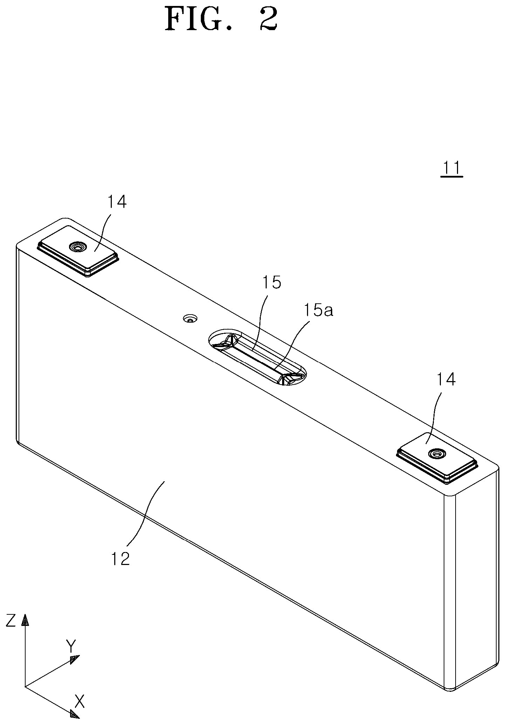

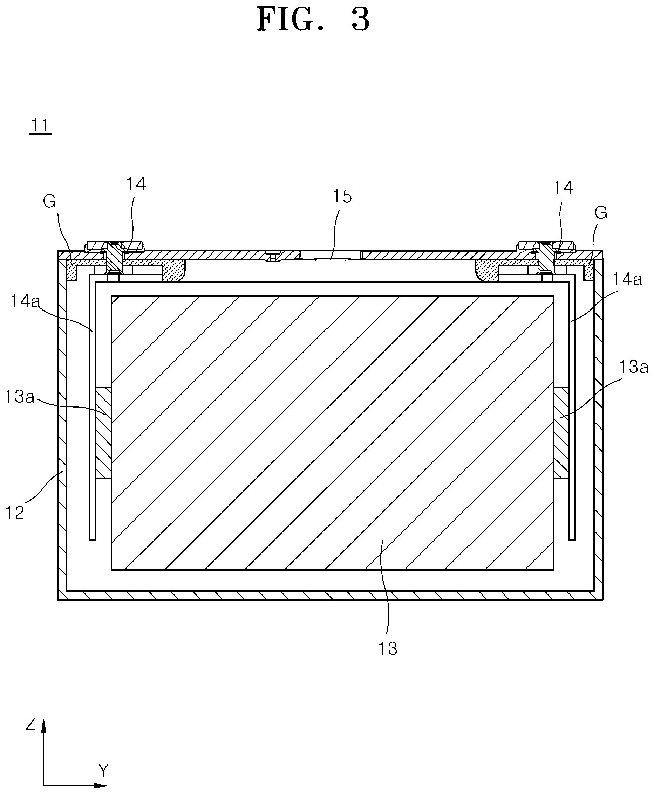

FIG. 2 is a perspective view schematically illustrating a configuration of a battery cell according to embodiments of the present disclosure, and FIG. 3 is a cross-sectional view schematically illustrating the configuration of the battery cell according to embodiments of the present disclosure.

Referring to FIGS. 1 to 3, the battery cell 11 according to the present embodiment may include a case 12, an electrode assembly 13, and a terminal 14.

The case 12 may form an exterior of the battery cell 11 and accommodate the electrode assembly 13.

The case 12 according to the present embodiment may have a rectangular parallelepiped shape with a hollow interior. The case 12 may be formed of a metal material such as copper, aluminum, nickel, etc.

The electrode assembly 13 may function as a unit structure that performs operations of charging and discharging power in the battery cell 11. The electrode assembly 13 may be disposed inside the case 12.

The electrode assembly 13 according to the present embodiment may include a positive electrode plate, a negative electrode plate, and a separator disposed between the positive electrode plate and the negative electrode plate.

The electrode assembly 13 may have a stacked form in which a plurality of positive electrode plates, separators, and negative electrode plates are sequentially stacked, or alternatively, the electrode assembly 13 may be formed in a form in which positive electrode plates, separators, and negative electrode plates are stacked and then wound around a winding axis clockwise or counterclockwise.

The positive electrode plate according to the present embodiment may be formed to have the form of a foil including a metal material such as aluminum or an aluminum alloy. The positive electrode plate is not particularly limited in type, size, or shape as long as it has conductivity without causing a chemical change in the secondary battery.

A positive electrode active layer may be applied to at least a portion of the positive electrode plate. The positive electrode active layer may be applied to both surfaces of the positive electrode plate, or alternatively, may be applied to only one surface of the positive electrode plate.

The positive electrode active layer may include a positive electrode active material.

The positive electrode active material may be a compound capable of reversible intercalation and deintercalation of lithium (lithiated intercalation compound). More specifically, one or more of composite oxides of lithium and a metal selected from cobalt, manganese, nickel, and a combination thereof may be used.

In one example, the positive electrode active material may include at least one of lithium-iron-phosphorus oxide (LiFePO4, LFP), lithium-manganese-iron-phosphorus oxide (LiMnFePO4, LMFP), and/or lithium-nickel-cobalt-manganese oxide (LiNixCoyMnzO2, NCM). Here, 0<x<1, 0<y<1, 0<z<1, and x+y+z=1 may be satisfied. The positive electrode active material may include only one of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, LNCM), and may also include two or all of lithium-iron-phosphorus oxide (LiFePO4, LFP), lithium-manganese-iron-phosphorus oxide (LiMnFePO4, LMFP), and lithium-nickel-cobalt-manganese oxide (LiNixCoyMnzO2, NCM).

The positive electrode active layer may further include a positive electrode conductive material.

The positive electrode conductive material is used to impart conductivity to the positive electrode active material, and any material which does not cause a chemical change and is electronically conductive may be used. Examples of the positive electrode conductive material may include a carbon-based material such as natural graphite, artificial graphite, carbon black, acetylene black, Ketjen black, carbon fibers, carbon nanofibers, carbon nanotubes, or the like, a metal-based material in the form of a metal powder or metal fiber containing copper, nickel, aluminum, silver, or the like a conductive polymer such as a polyphenylene derivative, or a mixture thereof.

The positive electrode active material may further include a positive electrode binder.

The positive electrode binder serves to attach the particles constituting the positive electrode active material to each other well, and also attach the positive electrode active material to the positive electrode plate well.

An example of the positive electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the positive electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The negative electrode plate according to the present embodiment may be formed to have the form of a foil including a metal material such as copper, a copper alloy, nickel, or a nickel alloy. The negative electrode plate is not particularly limited in type, size, or shape as long as it has conductivity without causing a chemical change in the secondary battery.

A negative electrode active layer may be applied to at least a portion of the negative electrode plate. The negative electrode active layer may be applied to both surfaces of the negative electrode plate, or alternatively, may be applied to only one surface of the negative electrode plate.

The negative electrode active layer may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite such as amorphous, plate-like, flaky, spherical, or fibrous natural graphite or artificial graphite, and examples of the amorphous carbon may include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and/or Sn may be used.

As the material capable of doping and dedoping lithium, a Si-based negative electrode active material or Sn-based negative electrode active material may be used. The Si-based negative electrode active material may include silicon, a silicon-carbon composite, SiOx (0 < x < 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO2, a Sn-based alloy, or a combination thereof.

The silicon-carbon composite may be a composite of silicon and amorphous carbon. According to one embodiment, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may further comprise crystalline carbon. For example, the silicon-carbon composite may include a core comprising crystalline carbon and silicon particles and an amorphous carbon coating layer located on the surface of the core.

The Si-based negative electrode active material or Sn-based negative electrode active material may be used in combination with the carbon-based negative electrode active material.

The negative electrode active layer may further include a negative electrode conductive material and a negative electrode binder.

The negative electrode conductive material is used to impart conductivity to the negative electrode active layer, and any material which does not cause a chemical change and is electronically conductive may be used. Examples of the negative electrode conductive material may include a carbon-based material such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, etc., a conductive polymer such as a polyphenylene derivative, or a mixture thereof.

The negative electrode binder serves to attach the particles constituting the negative electrode active material to each other well, and also attach the negative electrode active material to the negative electrode plate well.

An example of the negative electrode binder may include a non-aqueous binder, an aqueous binder, a dry binder, or a combination thereof.

Examples of the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, or a combination thereof.

When the aqueous binder is used as the negative electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The separator may be disposed between the positive electrode plate and the negative electrode plate. The separator may perform a function of preventing a short circuit between the positive electrode plate and the negative electrode plate while allowing lithium ions to move between the positive electrode plate and the negative electrode plate.

The separator may be disposed to entirely surround a surface region of the electrode assembly 13. Accordingly, the separator may prevent the positive electrode plate and the negative electrode plate from being directly exposed to the outside of the electrode assembly 13.

As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator may include a porous substrate, and a coating layer comprising an organic material, an inorganic material, or a combination thereof located on one or both surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may alternatively comprise a polyvinylidene fluoride-based polymer or a (meth)acrylic-based polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, or a combination thereof, but is not limited thereto.

The organic and inorganic materials may be present as a mixture in one coating layer or may be present as a coating layer comprising an organic material and a coating layer comprising an inorganic material stacked.

The electrode assembly 13 may further include an electrode tab 13a.

The electrode tab 13a may be provided as a pair of electrode tabs 13a. Any one of the pair of electrode tabs 13a may be connected to the positive electrode plate of the electrode assembly 13, and the other of the pair of electrode tabs 13a may be connected to the negative electrode plate of the electrode assembly 13. The electrode tab 13a may be integrally formed with the positive electrode plate or the negative electrode plate or may be separately manufactured from the positive electrode plate or the negative electrode plate and then coupled to the positive electrode plate or the negative electrode plate.

The pair of electrode tabs 13a may extend from the electrode assembly 13 in opposite directions. For example, the pair of electrode tabs 13a may extend from the electrode assembly 13 toward two side surfaces of the case 12, respectively. In contrast, the pair of electrode tabs 13a may extend from the electrode assembly 13 in the same direction. In this case, the pair of electrode tabs 13a may extend toward an upper surface of the case 12.

The terminal 14 may be connected to the electrode assembly 13 and protrude from the outside of the case 12. The terminal 14 may function as a component that provides the electrical connection of the battery cell 11 to external electronic devices or the like. The terminal 14 may be formed of an electrically conductive material, such as copper, nickel, aluminum, etc.

The terminal 14 may be provided as a pair of terminals 14. The pair of terminals 14 may be individually connected to the positive electrode plate and the negative electrode plate of the electrode assembly 13, respectively. Accordingly, the terminals 14 may function as a positive terminal and a negative terminal of the battery cell 11, respectively.

For example, any one of the pair of terminals 14 may be connected to an electrode tab 13a extending from the positive electrode plate through a metal current collector 14a. The other terminal 14 of the pair of terminals 14 may be connected to an electrode tab 13a extending from the negative electrode plate through a metal current collector 14a. However, the connection configuration between the terminals 14 and the electrode assembly 13 is not limited thereto, and the terminals 14 may be directly connected to the electrode tab 13a.

The specific shape of the terminal 14 is not limited to the shape illustrated in FIG. 2, and may be designed to be formed in any of various shapes.

The terminal 14 may be electrically insulated from the case 12 by a gasket G having an insulating property.

The battery cell 11 according to the present embodiment may further include a vent 15.

The vent 15 may be opened or closed in response to changes in internal pressure of the case 12. That is, the vent 15 may close the case 12 during normal operation of the battery cell 11, thereby blocking electrolyte or the like from leaking out of the case 12 or moisture, foreign substances, or the like from entering the case 12. The vent 15 may open the case 12 when thermal runaway occurs in the battery cell 11, thereby guiding flames, gas, smoke, or the like formed inside the case 12 to be discharged to the outside of the case 12.

The vent 15 may be formed to have a substantially plate shape. The vent 15 may be fixed to the case 12 using various types of coupling methods, such as welding, bolting, fitting, etc. A thickness of the vent 15 may be smaller than that of the case 12. Accordingly, the vent 15 may be easily ruptured or broken when the internal pressure of the case 12 increases. The vent 15 may include a notch 15a which is concavely formed into an inside of the vent 15 to be preferentially ruptured when the internal pressure of the case 12 increases.

The plurality of battery cells 11 of each cell stack 10 may be electrically connected by a plurality of busbars. Both sides of each busbar may be connected to terminals 14 of a pair of adjacent battery cells 11. The plurality of battery cells 11 may be connected in series or in parallel by the busbars.

The pack housing 20 may form a schematic exterior of the battery pack and accommodate the cell stack 10.

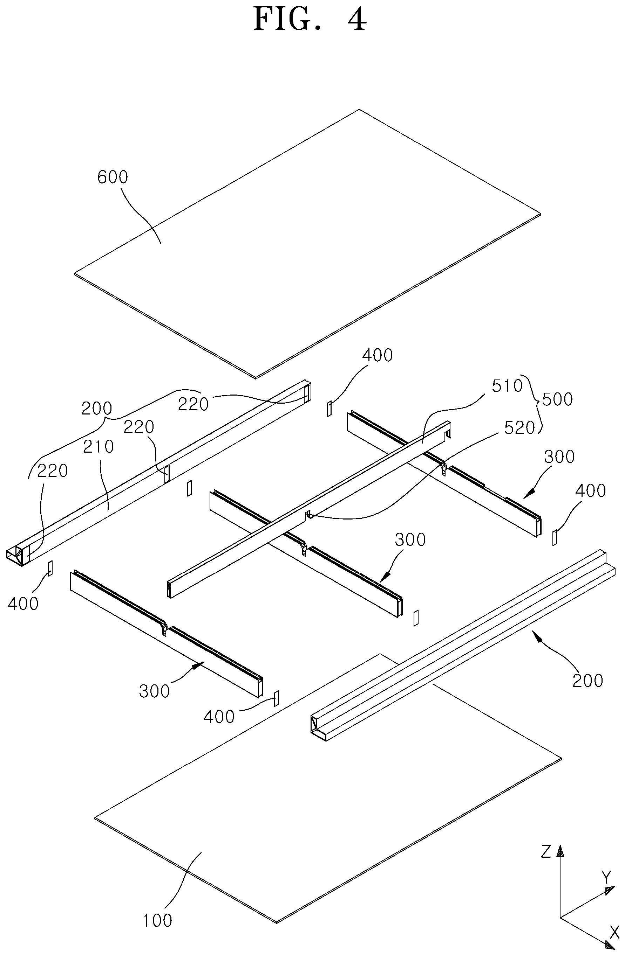

FIG. 4 is an exploded perspective view schematically illustrating a configuration of a pack housing according to embodiments of the present disclosure.

Referring to FIGS. 1 to 4, the pack housing 20 according to the present embodiment includes a bottom plate 100, a first frame 200, a second frame 300, and an adhesive member 400.

The bottom plate 100 may form a lower exterior of the pack housing 20 and support the cell stack 10.

The bottom plate 100 according to the present embodiment may have a shape of a flat plate perpendicular to an up-down direction (e.g., a z-direction). The shape of the bottom plate 100 may be designed to be formed in any of various shapes, such as a circular shape, an elliptical shape, a polygonal shape, and the like and is not limited to the rectangular shape illustrated in the drawing.

A cooling flow path through which coolant flows may be formed inside the bottom plate 100.

A plurality of cell stacks 10 may be disposed on the bottom plate 100. Bottom surfaces of cases 12 of battery cells 11 of the plurality of cell stacks 10 may be in contact with an upper surface of the bottom plate 100.

The plurality of cell stacks 10 may be arranged on the bottom plate 100 in two or more columns in at least one of the first direction and/or the second direction. In the present embodiment, the number of the plurality of cell stacks 10 may be four, and the four cell stacks 10 may be arranged in two columns in the first direction and the second direction.

The first frame 200 may form a side exterior of the pack housing 20. The first frame 200 may be provided as a pair of first frames 200. The pair of first frames 200 may be spaced apart from each other in the first direction on the bottom plate 100.

All the plurality of cell stacks 10 may be disposed between the pair of first frames 200. That is, all the plurality of cell stacks 10 may be arranged between the pair of first frames 200 in two or more columns in at least one of the first direction and the second direction.

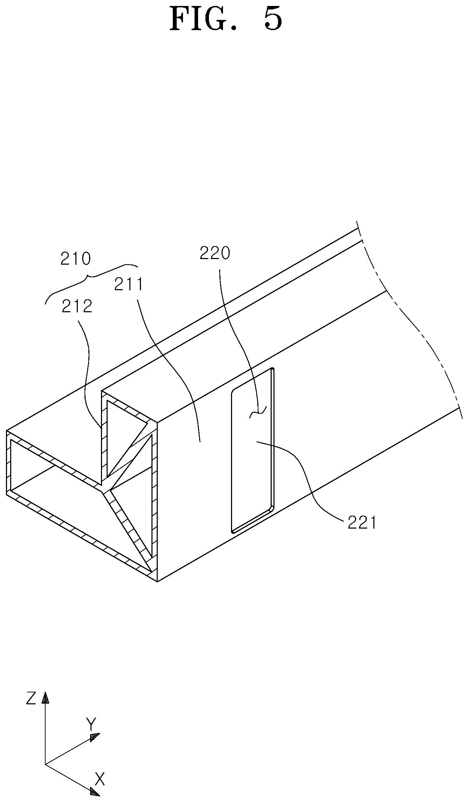

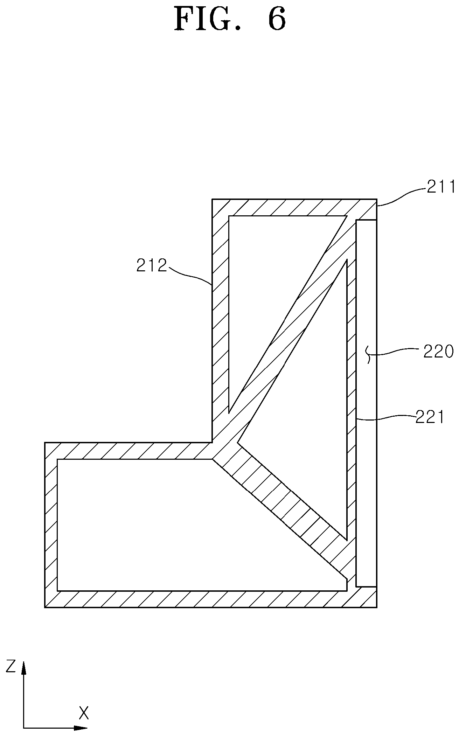

FIG. 5 is a perspective view schematically illustrating a configuration of a first frame according to embodiments of the present disclosure, and FIG. 6 is a cross-sectional view schematically illustrating the configuration of the first frame according to embodiments of the present disclosure.

Referring to FIGS. 4 to 6, the first frame 200 according to the present embodiment may include a first frame body 210 and a groove 220.

A longitudinal direction of the first frame body 210 according to the present embodiment may extend parallel to the second direction. A length of the first frame body 210 in the second direction may be greater than the sum of lengths of the plurality of cell stacks 10 in the second direction which are arranged in the second direction.

The first frame body 210 may be formed of a metal material, such as aluminum, stainless steel, etc. The first frame body 210 may be manufactured using an extrusion process.

The first frame body 210 may include an inner surface 211 and an outer surface 212 that are disposed to be opposite to each other in the first direction. The inner surface 211 and the outer surface 212 may have a planar shape perpendicular to the first direction.

The inner surface 211 may be disposed to face the cell stack 10. Inner surfaces 211 of a pair of first frame bodies 210 may be disposed to face each other in the first direction.

A shape of a cross section of the first frame body 210 is not limited to the shape illustrated in FIGS. 5 and 6 and may be designed to change in any of various shapes.

The groove 220 may be concavely formed on an inside of the first frame body 210. The groove 220 may provide a space in which a second frame 300, which will be described herein, may be inserted into the first frame body 210.

The groove 220 according to the present embodiment may have a shape of a groove which is concavely formed from the inner surface 211 of the first frame body 210 toward the outer surface 212. A shape of a cross section of the groove 220 may be designed to be formed in any of various shapes other than the quadrilateral shape illustrated in FIGS. 5 and 6.

The groove 220 may include a groove surface 221.

The groove surface 221 according to the present embodiment may be disposed between the inner surface 211 and the outer surface 212. The groove surface 221 may be disposed parallel to the inner surface 211 and the outer surface 212. For example, the groove surface 221 may have a planar shape perpendicular to the first direction.

The groove 220 may be provided as a plurality of grooves 220. Two or more grooves 220 may be formed in each of the first frame bodies 210.

The grooves 220 formed in each of the first frame bodies 210 may be arranged at predetermined intervals in the second direction. The grooves 220 each formed in a different first frame body 210 may be disposed to face each other in the first direction.

The second frame 300 may be disposed between the pair of first frames 200. The second frame 300 may be disposed to cross the first frame 200.

The second frame 300 may be provided as a plurality of second frames 300. The plurality of second frames 300 may be arranged between the pair of first frames 200 in the second direction. The plurality of second frames 300 may partition the space formed between the pair of first frames 200 in the second direction.

Both end portions of each second frame 300 may be inserted into an inside of the first frame 200. More specifically, each of the two end portions of each second frame 300 may be inserted into the groove 220 formed in a different first frame 200.

The plurality of cell stacks 10 and the plurality of second frames 300 may be alternately disposed in the second direction. The cell stacks 10 may be individually disposed in a space between a pair of adjacent second frames 300 in the second direction. That is, among the plurality of second frames 300, a pair of second frames 300 arranged at the outermost end may be disposed, together with the pair of first frames 200, to surround an entire space in which the plurality of cell stacks 10 are accommodated. Among the plurality of second frames 300, the remaining second frames 300 except for the pair of second frames 300 arranged at the outermost end may partition a region between a pair of adjacent cell stacks 10 in the second direction.

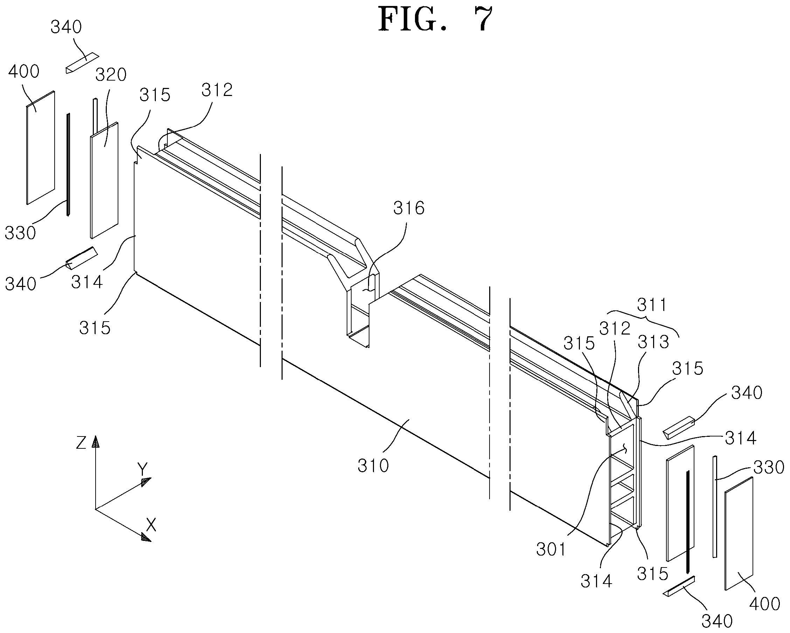

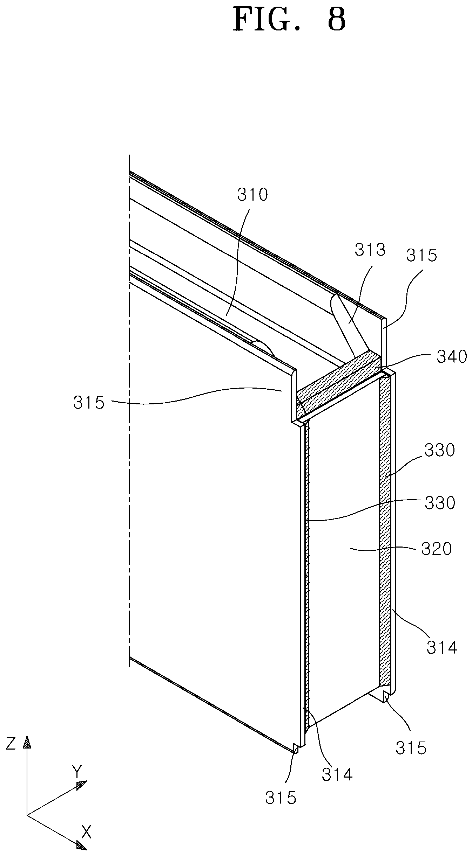

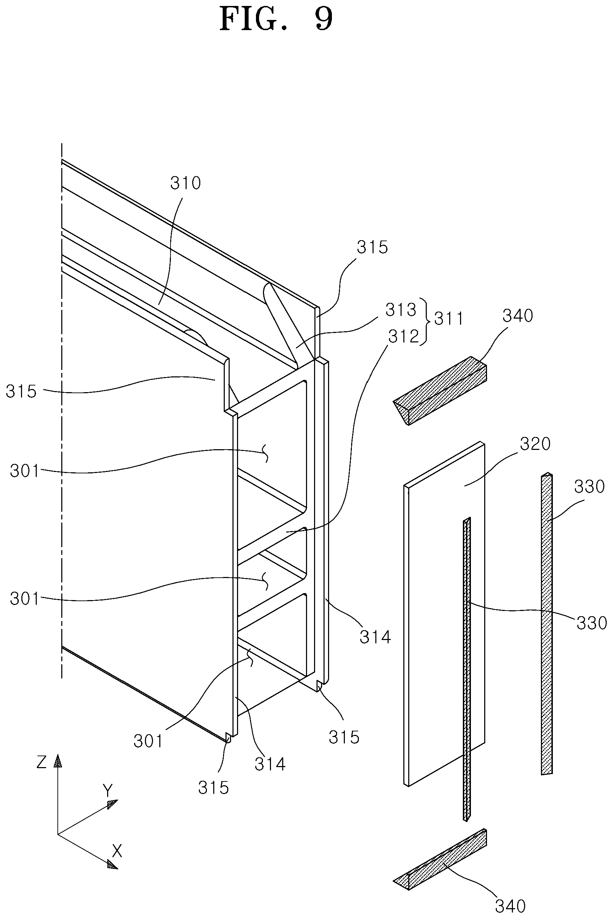

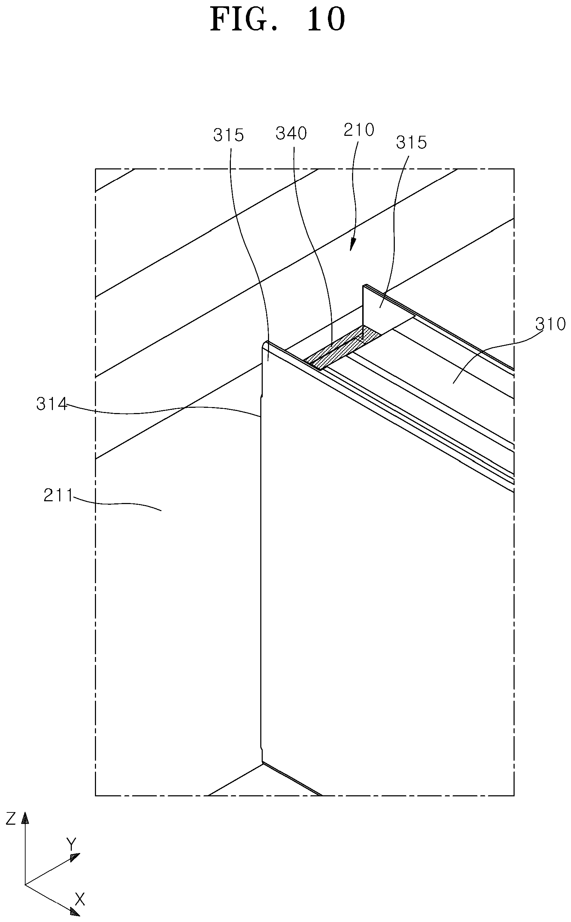

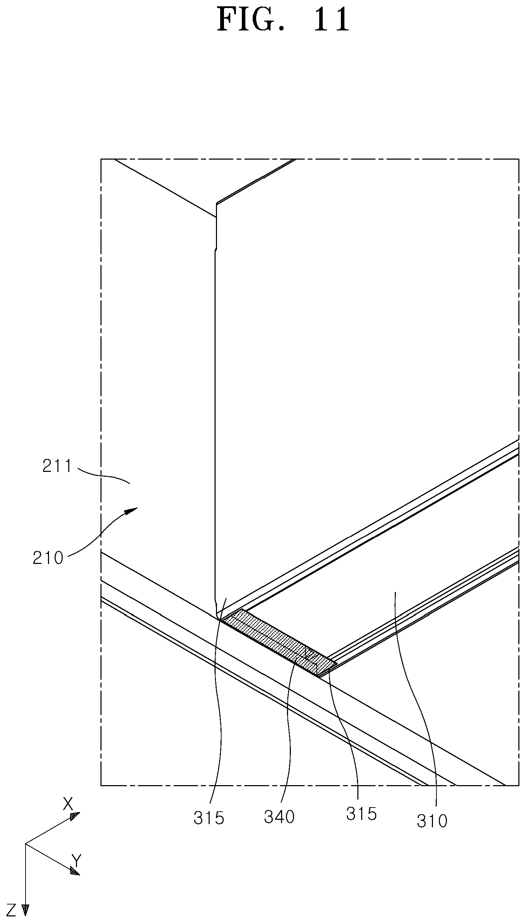

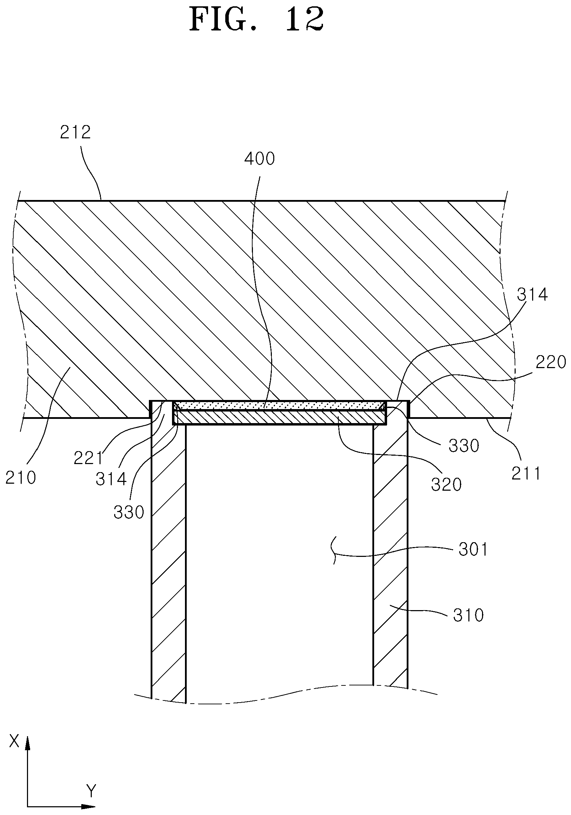

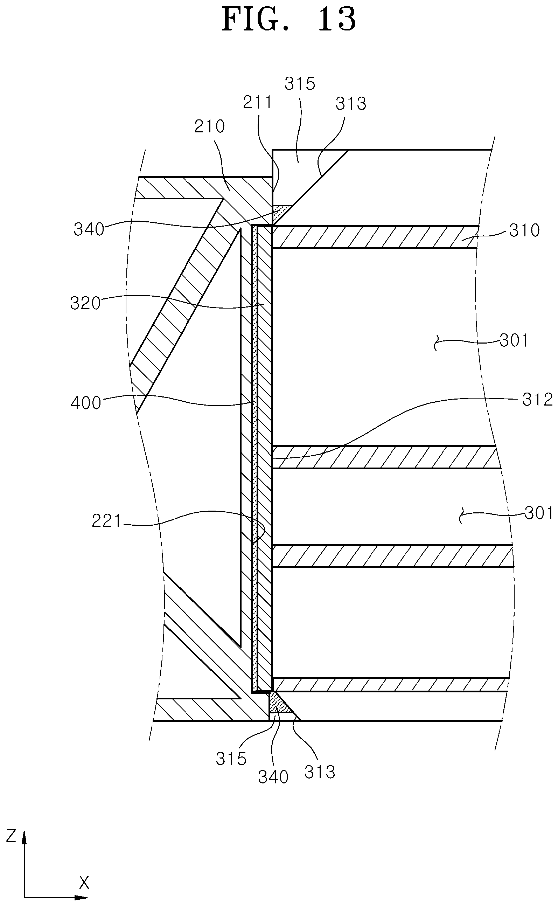

FIG. 7 is a perspective view schematically illustrating a configuration of a second frame according to embodiments of the present disclosure, FIG. 8 is a perspective view schematically illustrating a configuration of an end portion of the second frame according to embodiments of the present disclosure, FIG. 9 is an exploded perspective view schematically illustrating the configuration of the end portion of the second frame according to embodiments of the present disclosure, FIG. 10 is a perspective view schematically illustrating a state in which the first frame and the second frame are coupled according to embodiments of the present disclosure, FIG. 11 is a bottom perspective view schematically illustrating the state in which the first frame and the second frame are coupled according to embodiments of the present disclosure, FIG. 12 is a plan cross-sectional view schematically illustrating the state in which the first frame and the second frame are coupled according to embodiments of the present disclosure, and FIG. 13 is a front cross-sectional view schematically illustrating the state in which the first frame and the second frame are coupled according to embodiments of the present disclosure.

Referring to FIGS. 4 to 13, the second frame 300 according to the present embodiment may include a second frame body 310 and a cover plate 320.

A longitudinal direction of the second frame body 310 according to the present embodiment may extend parallel to the first direction.

The second frame body 310 may include a pair of end surfaces 311.

The pair of end surfaces 311 may form exteriors of both end portions of the second frame body 310 which are spaced apart from each other in the longitudinal direction of the second frame body 310, that is, in the first direction. Each end surface 311 may be disposed to face an inner surface 211 of a different first frame 200.

Each end surface 311 may include a first end surface 312 and a second end surface 313.

The first end surface 312 may be disposed to face the groove surface 221 of the groove 220.

The first end surface 312 according to the present embodiment may be exemplified as a portion of the end surface 311 that directly faces the groove surface 221 in the first direction, of the entire region of the end surface 311. The first end surface 312 may have a planar shape which is parallel to the groove surface 221 and perpendicular to the first direction.

The second end surface 313 may be disposed to face the inner surface 211 of the first frame body 210.

The second end surface 313 according to the present embodiment may be exemplified as the remaining region of the entire region of the end surface 311 excluding the first end surface 312. The second end surface 313 may be disposed to directly face the inner surface 211 disposed on the outer side of the groove 220.

The second end surface 313 may be provided as a pair of second end surfaces 313, and the first end surface 312 may be disposed between the pair of second end surfaces 313.

The first end surface 312 and the second end surfaces 313 may be vertically disposed. For example, any one of the pair of second end surfaces 313 may extend upward from an upper end portion of the first end surface 312, and the other second end surface 313 may extend downward from a lower end portion of the first end surface 312.

However, the second end surfaces 313 are not limited thereto and may be formed as a single second end surface 313. In this case, the second end surfaces 313 may be disposed above or below the first end surface 312.

The second frame body 310 may be formed of a metal material, such as aluminum, stainless steel, etc.

The second frame body 310 may be manufactured using an extrusion process. For example, a cavity 301 may be formed inside the second frame body 310. The cavity 301 may extend in the first direction. Both end portions of the cavity 301 may pass through each of the pair of end surfaces 311 of the second frame body 310. The cavity 301 may be provided as a plurality of cavities 301. The plurality of cavities 301 may be disposed inside the second frame body 310 to be spaced apart from each other in the up-down direction.

The second frame body 310 according to the present embodiment may further include an inner partition 314.

The inner partition 314 may extend from the first end surface 312 and be inserted into the groove 220. The inner partition 314 may form an exterior of an end portion of the second frame body 310 inserted into the groove 220.

The inner partition 314 according to the present embodiment may have a shape of a plate extending from the first end surface 312 toward the groove surface 221. The inner partition 314 may be disposed perpendicular to the second direction. An end portion of the inner partition 314 may be in contact with the groove surface 221. An outer surface of the inner partition 314 may be in contact with an inner peripheral surface of the groove 220.

The inner partition 314 may be provided as a pair of inner partitions 314. The pair of inner partitions 314 may be spaced apart from each other in the second direction. The pair of inner partitions 314 may be individually formed at each of the two end portions of the second frame body 310.

The cover plate 320 may be disposed to face the end surface 311. The cover plate 320 may function as a component that secures a contact area of the second frame 300 with an adhesive member 400 which is further described herein.

The cover plate 320 may be provided as a pair of cover plates 320. The pair of cover plates 320 may be individually disposed to face different end surfaces 311.

The cover plate 320 according to the present embodiment may have a flat plate shape perpendicular to the first direction. An area of the cover plate 320 may be smaller than an area of the groove surface 221. The cover plate 320 may be disposed between the pair of inner partitions 314. Peripheral surfaces of both sides of the cover plate 320, which are spaced apart from each other in the second direction, may be in contact with an inner surface of each inner partition 314. Accordingly, a boundary region between the cover plate 320 and the inner partition 314 may have a shape of a line extending in the up-down direction.

One surface of the cover plate 320 may be disposed to face the first end surface 312 positioned between the pair of inner partitions 314. The one surface of the cover plate 320 may be in contact with the first end surface 312. The cover plate 320 may be fixed to the first end surface 312.

For example, the second frame 300 according to the present embodiment may further include a cover welding line 330.

The cover welding line 330 may bond the cover plate 320 and the first end surface 312. The cover welding line 330 may be formed by melting and hardening a contact region between the cover plate 320 and the second frame body 310 using laser welding, ultrasonic welding, or the like.

The cover welding line 330 according to the present embodiment may protrude from the cover plate 320 toward the groove surface 221. Accordingly, the cover welding line 330 may not interfere with the inner surface 211 during the process of inserting the cover plate 320 into the groove 220. Further, the cover welding line 330 may be disposed inside the groove 220 together with the cover plate 320 and thus may not interfere with the cell stack 10 disposed outside the second frame 300.

The cover welding line 330 may be provided as a pair of cover welding lines 330. The pair of cover welding lines 330 may be disposed to be spaced apart from each other.

More specifically, the pair of cover welding lines 330 may be spaced apart from each other in the second direction. Each cover welding line 330 may vertically extend along a boundary region between the cover plate 320 and the inner partition 314. In the present embodiment, the cover welding line 330 may be a welding bead formed by welding the boundary region between the cover plate 320 and the inner partition 314, which is formed when the cover plate 320 and the inner partition 314 come into contact with each other.

The other surface of the cover plate 320 may be disposed to face the groove surface 221. A thickness of the cover plate 320 in the first direction may be smaller than an extension length of the inner partition 314 in the first direction. Accordingly, the other surface of the cover plate 320 may be disposed to be spaced a predetermined distance from the groove surface 221 in the first direction. During the process of inserting the end portion of the second frame body 310 into the groove 220, the end portion of the inner partition 314 may be preferentially brought into contact with the groove surface 221, and the other surface of the cover plate 320 may be maintained in a state of being spaced apart from the groove surface 221.

The other surface of the cover plate 320 may be disposed inside the groove 220 or may be disposed outside the groove 220.

The adhesive member 400 may be disposed between an end portion of the second frame 300 and the first frame 200. The adhesive member 400 may fix the second frame 300 to the first frame 200 using an adhesive force thereof. The adhesive member 400 may be provided as a plurality of adhesive members 400. The adhesive members 400 may individually fix end portions of different second frames 300 to the first frame 200. Accordingly, the pack housing 20 according to the present embodiment may prevent interference between the welding bead and the cell stack 10 and further expand an installation space of the cell stack 10 by fixing the second frame 300 to the first frame 200 without forming a welding bead in a corner region of the first frame 200 and the second frame 300, more specifically, in a boundary region between the inner surface 211 of the first frame body 210 and a side surface of the second frame body 310.

The adhesive member 400 according to the present embodiment may include an adhesive material such as epoxy, acrylic, polyurethane, silicone, cyanoacrylate, etc. The adhesive member 400 may be applied or injected in a liquid state between the end portion of the second frame 300 and the first frame 200 and then hardened into a solid state to fix the first frame 200 and the second frame 300.

The adhesive member 400 may be disposed inside the groove 220. The adhesive member 400 may be disposed between the cover plate 320 and the groove surface 221. Each of two surfaces of the adhesive member 400 may be bonded and fixed to an outer surface and the groove surface 221 of the cover plate 320.

The adhesive member 400 may be disposed between the pair of inner partitions 314. Two side surfaces of the adhesive member 400 which are spaced in the second direction may each be in contact with the inner surfaces of the pair of inner partitions 314.

The adhesive member 400 may be disposed between the pair of cover welding lines 330. Each of the two side surfaces of the adhesive member 400 may be in contact with an inner surface of a different cover welding line 330. A width of the cover welding line 330 in the second direction may decrease toward the groove surface 221. For example, the cover welding line 330 may have a triangular cross-sectional shape with an inner surface in contact with the adhesive member 400 being disposed to be inclined. Accordingly, the cover welding line 330 may further expand a space in which the adhesive member 400 may be accommodated between the cover plate 320 and the groove surface 221.

The second frame 300 according to the present embodiment may further include a body welding line 340.

The body welding line 340 may bond the first frame 200 and the second frame 300. The body welding line 340 may be formed by melting and hardening a contact region between the first frame 200 and the second frame 300 using laser welding, ultrasonic welding, or the like. Accordingly, the pack housing 20 according to the present embodiment may further strengthen a coupling force between the first frame 200 and the second frame 300 not only by the adhesive member 400 but also by the body welding line 340.

The body welding line 340 according to the present embodiment may be disposed between the second end surface 313 and the inner surface 211. The body welding line 340 may be individually formed between different second end surfaces 313 and the inner surface 211.

More specifically, the second end surface 313 according to the present embodiment may be disposed to be inclined with respect to the first end surface 312 and the inner surface 211. A distance between the second end surface 313 and the inner surface 211 may decrease toward the first end surface 312. For example, the second end surfaces 313 disposed on an upper side of the first end surfaces 312 of the pair of second end surfaces 313 may be disposed so that a distance to the inner surface 211 increases toward an upper end portion thereof. The second end surface 313 disposed on a lower side of the first end surfaces 312 of the pair of second end surfaces 313 may be disposed so that the distance to the inner surface 211 increases toward a lower end portion thereof.

The end portion of the inner partition 314 is in contact with the groove surface 221, and thus the second end surface 313 may be in contact with an inlet-side corner of the groove 220. Accordingly, a boundary region between the inner surface 211 and the second end surface 313 may have a shape of a line extending parallel to the second direction along the inlet-side corner of the groove 220.

The body welding line 340 may extend in the second direction along the boundary region between the second end surface 313 and the inner surface 211. In the present embodiment, the body welding line 340 may be a welding bead formed by welding the boundary region between the second end surface 313 and the inner surface 211, which is formed when the second end surface 313 and the inlet-side corner of the groove 220 come into contact with each other.

In the present embodiment, the first end surface 312 and the second end surface 312 are disposed on a vertical surface of the second frame body 310. Since the first end surface 312 and the second end surface 313 are vertically disposed, for example, the first end surface 312 and the second end surface 313 are arranged in the up-down direction, the body welding line 340 may be disposed on at least one of upper and lower sides of a second frame body 310 in which the cell stack 10 is not disposed. Accordingly, the body welding line 340 may not interfere with the cell stack 10 facing the second frame body 310 in the second direction.

The second frame body 310 according to the present embodiment may further include an outer partition 315.

The outer partition 315 according to the present embodiment may extend from the second end surface 313 toward the inner surface 211 of the first frame body 210. The outer partition 315 may have a shape of a plate perpendicular to the second direction. An end portion of the outer partition 315 may be in contact with the inner surface 211 of the first frame body 210.

The outer partition 315 may be provided as a pair of outer partitions 315. The pair of outer partitions 315 may be disposed to be spaced apart from each other in the second direction. A pair of outer partitions 315 may be individually formed on each second end surface 313.

The body welding line 340 may be disposed between the pair of outer partitions 315. Each of two end portions of the body welding line 340 spaced apart from each other in the second direction may be disposed to face a corresponding one of the pair of outer partitions 315. Accordingly, the outer partitions 315 may prevent the two end portions of the body welding line 340 from protruding to either side of the second frame body 310 to prevent the body welding line 340 from interfering with the cell stack 10. The end portions of the body welding line 340 may be in contact with the outer partitions 315 or disposed to be spaced apart from the outer partitions 315.

The pack housing 20 according to the present embodiment may further include a third frame 500.

The third frame 500 may be disposed between the pair of first frames 200. The third frame 500 may be disposed to cross the second frames 300. The third frame 500 may be disposed parallel to the first frames 200. Accordingly, a space formed between the pair of first frames 200 may be partitioned in the first direction.

The third frame 500 may be formed as one or more third frames 500. In FIG. 4, although an example in which the third frame 500 is formed as a single third frame 500 is illustrated, in some embodiments, the third frame 500 may be formed as a plurality of third frames 500. When the third frame 500 is formed as a plurality of third frames 500, the plurality of third frames 500 may be arranged in the first direction.

Between the first frames 200, the cell stacks 10 and the third frames 500 may be alternately disposed in the first direction. Each third frame 500 may each be disposed between the pair of cell stacks 10 arranged between the pair of first frames 200 in the first direction.

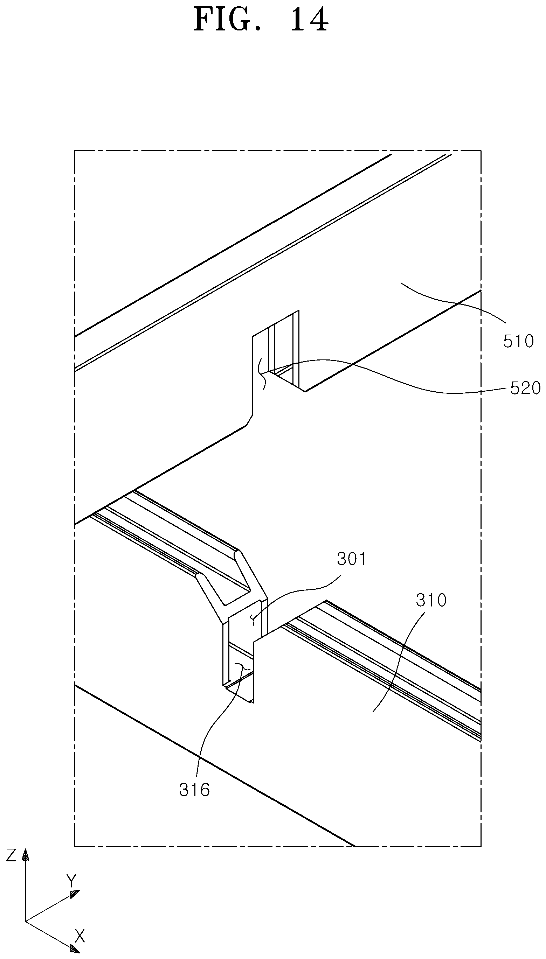

FIG. 14 is an enlarged view schematically illustrating a configuration of a third frame according to embodiments of the present disclosure.

Referring to FIGS. 4 and 14, the third frame 500 according to the present embodiment may include a third frame body 510 and a first slit 520.

A longitudinal direction of the third frame body 510 may extend parallel to the second direction. The third frame body 510 may be disposed between inner surfaces 211 of different first frame bodies 210.

The third frame body 510 may be formed of a metal material such as aluminum, stainless steel, etc. The third frame body 510 may be manufactured using an extrusion process.

The third frame body 510 and the second frame body 310 may be disposed perpendicular to each other. The third frame body 510 may be disposed to face one or more second frame bodies 310 vertically.

Hereinafter, as illustrated in FIG. 4, an example in which the third frame body 510 is disposed to face all the second frame bodies 310 vertically will be described. However, the third frame body 510 is not limited thereto and may be disposed to face some second frame bodies 310 vertically. In this case, at least one of two end portions of the third frame body 510 may be disposed to face a side surface of the second frame body 310 disposed at the outermost end among the plurality of second frame bodies 310 in the second direction.

The first slit 520 may have a shape of a groove that is concavely formed upward from a lower end portion of the third frame body 510. The first slit 520 may pass through two side surfaces of the third frame body 510 in the first direction.

The first slit 520 may be formed as a plurality of first slits 520. The plurality of first slits 520 may be arranged at predetermined intervals in the second direction. Each of the first slits 520 may be disposed to face a different second frame body 310 vertically.

Each of the second frame bodies 310 may be inserted into a different first slit 520. Each of the second frame bodies 310 may be press-fitted or force-fitted to the different first slit 520. A lower surface of the third frame body 510 may be in contact with the upper surface of the bottom plate 100. Accordingly, the third frame body 510 may be integrally assembled with the plurality of second frame bodies 310 without being divided in the second direction.

The second frame 300 according to the present embodiment may further include a second slit 316, which may be a plurality of second slits 316.

The second slit 316 may be concavely formed downward from an upper end portion of the second frame body 310. The second slits 316 may pass through two side surfaces of the second frame body 310 in the second direction.

The second slit 316 may be individually formed on each second frame body 310 facing the third frame body 510 vertically. The number of second slits 316 may be equal to the number of first slits 520. The second slits 316 may be disposed to face different first slits 520 in the up-down direction.

A portion of the third frame body 510 positioned above the first slit 520 may be inserted into the second slit 316. The third frame body 510 may be press-fitted or force-fitted to the second slit 316. Accordingly, the pack housing 20 according to the present embodiment may further reduce a vertical height of the third frame body 510.

The pack housing 20 according to the present embodiment may further include a housing cover 600.

The housing cover 600 may close an internal space of the pack housing 20 in which the cell stack 10 is accommodated.

The housing cover 600 according to the present embodiment may have a shape of a plate disposed parallel to the bottom plate 100. The housing cover 600 may be disposed on upper side of the first frame 200, the second frame 300, and the third frame 500. The housing cover 600 may be in contact with the upper end portion of at least any one of the first frame 200, the second frame 300, and the third frame 500. The housing cover 600 may be fixed to the upper end portion of at least any one of the first frame 200, the second frame 300, and the third frame 500 using any one of various types of coupling methods, such as welding, bolting, fitting, adhesion, etc.

Hereinafter, a pack housing 20 according to another embodiment of the present disclosure will be described.

The pack housing 20 according to the present embodiment may be configured to differ only in the detailed configuration of the second frame 300 from the pack housing 20 according to embodiments of the present disclosure.

Accordingly, in describing the pack housing 20 according to the present embodiment, only the detailed configuration of the second frame 300 that is different from that of the pack housing 20 according to embodiments of the present disclosure will be described.

The description of the remaining configuration of the pack housing 20 according to embodiments of the present disclosure may be applied to the remaining configuration of the pack housing 20 according to the present embodiment without change.

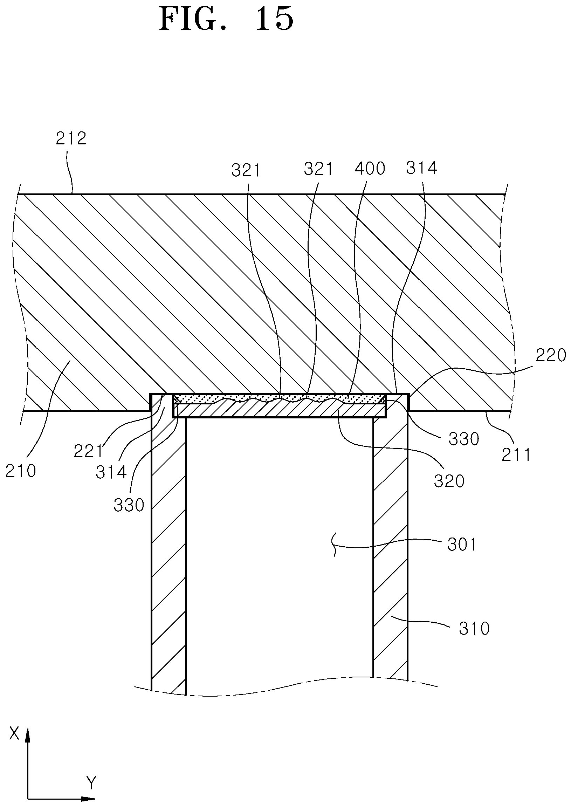

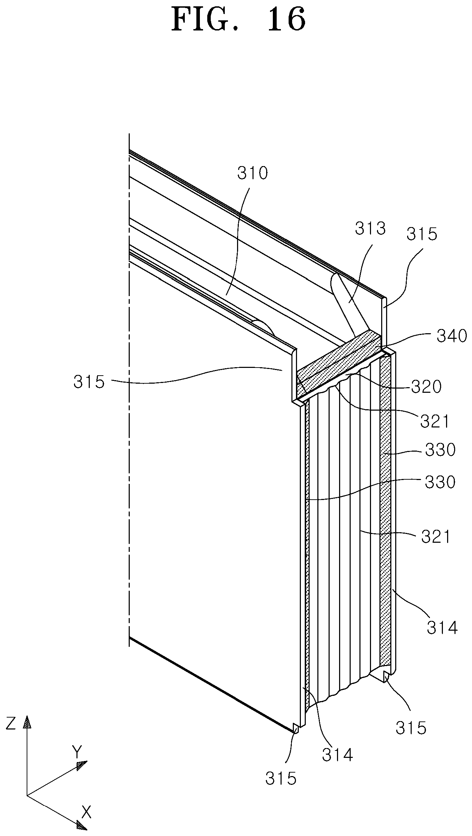

FIG. 15 is a cross-sectional view schematically illustrating a configuration of a second frame according to another embodiment of the present disclosure, and FIG. 16 is a perspective view schematically illustrating the configuration of the second frame according to another embodiment of the present disclosure.

Referring to FIGS. 15 and 16, a second frame 300 according to the present embodiment may further include a protruding member 321.

The protruding member 321 may protrude from a cover plate 320 toward a groove surface 221. The protruding member 321 may be inserted into an adhesive member 400. The protruding member 321 may function as a component that expands a contact area between the cover plate 320 and the adhesive member 400 and strengthens a coupling force between the cover plate 320 and the adhesive member 400.

The protruding member 321 may be individually formed on each of different cover plates 320.

The protruding member 321 according to the present embodiment may have a shape of a band extending in the up-down direction. The protruding member 321 may be provided as a plurality of protruding members 321. The plurality of protruding members 321 may be arranged in the second direction.

However, the shape and arrangement of the protruding members 321 are not limited thereto, and the protruding members 321 may have various shapes and arrangements. For example, the protruding member 321 may have a shape of a band extending in the second direction, and the plurality of protruding members 321 may be arranged in the up-down direction. Further, the plurality of protruding members 321 may be disposed in a grid pattern in the second direction and the up-down direction.

A shape of a cross section of the protruding member 321 may be designed to be formed in any of various shapes, such as a polygonal shape and the like, other than a semicircular shape illustrated in FIGS. 15 and 16.

According to the present disclosure, by fixing a first frame and a second frame without forming a welding bead in a space in which a cell stack is accommodated, interference between the welding bead and the cell stack can be prevented, and an installation space of the cell stack can be further expanded.

However, the effects obtained through the present disclosure are not limited to the herein-described effects, and other technical effects that are not mentioned will be clearly understood by those skilled in the art from the description of the disclosure described herein.

Although the present disclosure has been described with reference to the embodiments shown in the drawings, these embodiments are merely exemplary, and it should be understood by those skill in the art that various modifications are possible.

## Claims

1. A pack housing (20) comprising:
a bottom plate (100);
a pair of first frames (200) spaced apart from each other in a first direction on the bottom plate (100);
a plurality of second frames (300) arranged between the pair of first frames (200) in a second direction intersecting the first direction and wherein each of two end portions of each second frame (300) of the plurality of second frames (300) is inserted into a different first frame (200); and
a plurality of adhesive members (400) disposed between the pair of first frames (200) and end portions of the plurality of second frames (300) and which fix the plurality of second frames (300) to the pair of first frames (200).

2. The pack housing (20) as claimed in claim 1, wherein a first frame (200) of the pair of first frames (200) comprises:
a first frame body (210) having an inner surface (211) and an outer surface (212) that extend in the second direction and are disposed to face each other in the first direction; and
a plurality of grooves (220) concavely formed from the inner surface (211) toward the outer surface (212), and
for a second frame (300) of the plurality of second frames (300), each of the two end portions of the second frame (300) is inserted into a groove (220) of the plurality of grooves (220) of a respective first frame (200) of the pair of first frames (200).

3. The pack housing (20) as claimed in claim 2, wherein a second frame (300) of the plurality of second frames (300) comprises:
a second frame body (310) which extends in the first direction and has a pair of end surfaces; and
a pair of cover plates (320) which are coupled to the second frame body (310) and each disposed to face a corresponding one of the end surfaces, wherein:
the groove (220) comprises a groove surface (221) disposed to face a cover plate (320) of the pair of cover plates (320), and
an adhesive member (400) of the plurality of adhesive members (400) is disposed between the cover plate (320) and the groove surface (221).

4. The pack housing (20) as claimed in claim 3, wherein the second frame (300) further comprises a cavity (301) which extends in the first direction inside the second frame body (310) and passes through an end surface of the pair of end surfaces.

5. The pack housing (20) as claimed in claim 3 or 4, wherein the second frame (300) further comprises a plurality of protruding members (321) which protrude from the cover plate (320) toward the groove surface (221) and are inserted into adhesive members (400) of the plurality of adhesive members (400).

6. The pack housing (20) as claimed in any one of the claims 3 to 5, wherein the pair of end surfaces comprises:
a first end surface (312) disposed to face the groove surface (221); and
a second end surface (313) disposed to face the inner surface (211), and
the cover plate (320) is disposed between the first end surface (312) and the groove surface (221).

7. The pack housing (20) as claimed in claim 6, wherein the second frame (300) further comprises a cover welding line (330) which protrudes from the cover plate (320) toward the groove surface (221) and bonds the cover plate (320) and the second frame body (310).

8. The pack housing (20) as claimed in claim 7, wherein the cover welding line (330) is provided as a pair of cover welding lines (330), the pair of cover welding lines (330) are spaced apart from each other in the second direction, and the adhesive member (400) is disposed between the pair of cover welding lines (330).

9. The pack housing (20) as claimed in claim 7 or 8, wherein a width of the cover welding line (330) in the second direction decreases toward the groove surface (221).

10. The pack housing (20) as claimed in any one of the claims 6 to 9, wherein the second frame body (310) further comprises a pair of inner partitions (314) which extend from the first end surface (312) and are spaced apart from each other in the second direction, and
the cover plate (320) and the adhesive member (400) are disposed between the pair of inner partitions (314),
wherein preferably an inner partition (314) of the pair of inner partitions (314) is inserted into the groove (220) and disposed in contact with the groove surface (221).

11. The pack housing (20) as claimed in any one of the claims 6 to 10, wherein the first end surface (312) and the second end surface (313) are disposed on a vertical surface of the second frame body (310), and
the second frame (300) further comprises a body welding line (340) which is disposed between the second end surface (313) and the inner surface (211) and bonds a respective first frame (200) of the pair of first frames (200) and the second frame (300).

12. The pack housing (20) as claimed in claim 11, wherein the second end surface (313) is provided as a pair of second end surfaces (313), and the first end surface (312) is disposed between the pair of second end surfaces (313).

13. The pack housing (20) as claimed in claim 11 or 12, wherein the second frame body (310) further comprises a pair of outer partitions (315) which extend from the second end surface (313) and are spaced apart from each other in the second direction, and
the body welding line (340) is disposed between the pair of outer partitions (315);
wherein preferably an outer partition (315) of the pair of outer partitions (315) is in contact with the inner surface (211).

14. A battery pack comprising:
the pack housing (20) according to any one of the claims 1 to 13; and
a plurality of cell stacks (10) which are disposed inside the pack housing (20) and each comprise one or more battery cells.

15. The battery pack as claimed in claim 14, wherein the plurality of cell stacks (10) are arranged on the bottom plate (100) in at least two rows in the first direction, and
the plurality of cell stacks (10) and the plurality of second frames (300) are alternately disposed in the first direction.
